Europäisches Patentamt

European Patent Office

Office européen des brevets

(11) Veröffentlichungsnummer: **0 232 246 B1**

(12) **EUROPÄISCHE PATENTSCHRIFT**

(45) Veröffentlichungstag der Patentschrift: **25.03.92**

(51) Int. Cl.⁵: **B22F 9/22**, C21B 13/00

(21) Anmeldenummer: **87890021.6**

(22) Anmeldetag: **30.01.87**

(54) Verfahren zur Herstellung von für die Pulvermetallurgie geeigneten Eisenpulvern aus feinem Eisenoxidpulver durch Reduktion mit heissen Gasen.

(30) Priorität: **03.02.86 AT 253/86**
**17.12.86 AT 3358/86**

(43) Veröffentlichungstag der Anmeldung:
**12.08.87 Patentblatt 87/33**

(45) Bekanntmachung des Hinweises auf die
Patenterteilung:
**25.03.92 Patentblatt 92/13**

(84) Benannte Vertragsstaaten:
**AT BE CH DE FR GB IT LI LU NL SE**

(56) Entgegenhaltungen:
**DE-A- 1 803 640**
**DE-A- 2 014 336**
**DE-A- 2 443 978**

(73) Patentinhaber: **VOEST-ALPINE INDUSTRIEAN-LAGENBAU GESELLSCHAFT m.b.H.**
**Turmstrasse 44**
**A-4020 Linz(AT)**

(72) Erfinder: **Schrey, Günter Dipl.-Ing**
**Nöbauerstrasse 54**
**A-4040 Linz(AT)**
Erfinder: **Danninger, Herbert Dipl.-Ing.Dr.**
**Graf Starhemberg-Gasse 27/26**
**A-4040 Wien(AT)**
Erfinder: **Jangg, Gerhard Prof.Dr.**
**Rudolf Waisenhorn-Gasse 84**
**A-1238 Wien(AT)**

(74) Vertreter: **Haffner, Thomas M., Dr. et al**
**Patentanwaltskanzlei Dipl.-Ing. Adolf**
**Kretschmer Dr. Thomas M. Haffner Schotten-gasse 3a**
**A-1014 Wien(AT)**

## Beschreibung

Die Erfindung bezieht sich auf ein Verfahren zur Herstellung von für die Pulvermetallurgie geeigneten Eisenpulvern aus Eisenoxiden. Im besonderen soll hiebei von feinem (mittlere Korngröße kleiner 100 $\mu$m) Eisenoxidpulver ausgegangen werden, wobei die einzelnen Teilchen in sich noch hohe innere Porosität aufweisen. Derartiges Eisenoxidpulver fällt beispielsweise bei der Beizsäureregenerierung in großen Mengen an. Aus der AT-PS 318 677 ist bereits bekanntgeworden, daß die Verpreßbarkeit von Eisenpulvern in hohem Maße von einer geeigneten Vorbehandlung abhängt. Gemäß diesem bekannten Verfahren wurde Eisenpulver einem Glühverfahren unterworfen, wobei bei Temperaturen zwischen 650 und 700°C reduzierend ausgeglüht wurde. Auf diese Weise wurde bei den bekannten Verfahren sichergestellt, daß das Pulver nicht zusammenbacken kann, so daß eine Nachzerkleinerung entfallen kann und billigere und leistungsfähigere Öfen, wie z.B. Drehrohröfen, eingesetzt werden können.

Für die Weiterverarbeitung von Eisenpulvern in der Pulvermetallurgie ist neben einer guten Verpreßbarkeit, auf welche das Verfahren nach der AT-PS 318 677 abzielt, auch zu berücksichtigen, daß das Eisenpulver eine gute Fließfähigkeit, hohe Fülldichte, gute Festigkeit der ungesinterten Preßlinge und gute Sinterfähigkeit ergeben soll. Diese gleichzeitig zu berücksichtigenden Kriterien für ein Material, welches in der Folge pulvermetallurgisch weiterverarbeitet werden soll, haben zum Teil widersprüchliche Vorbehandlungsvoraussetzungen und im einzelnen ist zu diesen geforderten Voraussetzungen folgendes festzuhalten:

1. Fließfähigkeit:

Bei der in großem Maße automatisierten Herstellung der Preßkörper muß während des Füllvorganges das Pulver in kurzer Zeit die gesamte Matrizenform gleichmäßig ausfüllen. Auch bei kompliziertest geformten Teilen, d.h. bei vielfach geteilten Stempeln, dürfen keine Ungleichmäßigkeiten in der Füllung und Brückenbildungen auftreten. Gute Fließfähigkeit besitzen Pulver mit nicht zu geringer Korngröße und kugeliger Form.

2. Fülldichte:

Um die für eine bestimmte Pulvermenge erforderliche Füllhöhe und damit die Werkzeughöhe möglichst kurz zu halten, soll das Verhältnis von Preßdichte (siehe unten) zur Fülldichte möglichst niedrig, im allgemeinen nicht größer als 2:1 sein. Aufgrund des Bestrebens nach möglichst hohen Preßdichten bedeutet das, daß auch die Fülldichte möglichst hohe Werte annehmen soll. Ähnlich wie bei der Fließfähigkeit wird hohe Fülldichte bei kugelförmigen Pulvern mit nicht zu großem Feinanteil erreicht.

3. Gute Verpreßbarkeit:

Zur Erzielung möglichst hoher Dichten bei gegebenem Preßdruck bzw. zur möglichsten Reduktion des für eine bestimmte Preßdichte erforderlichen Preßdrucks (was eine Verringerung des Werkzeugverschleißes mit sich bringt) ist kugelige Teilchenform und eine möglichst ideale Gaußverteilung der Teilchengröße wünschenswert. Da die Reibung zwischen den Pulverteilchen beim Pressen mit zunehmender Kornfeinheit zunimmt, ist zu feines Pulver ebenfalls nicht erwünscht.

4. Festigkeit der ungesinterten Preßlinge ("Grünfestigkeit"):

Da eine sichere Handhabung der gepreßten Körper vor dem Sintern erforderlich ist, müssen diese ausreichende Festigkeit aufweisen, und vor allem bei einbaufertigen Genauteilen darf keineswegs ein Ausbrechen der Kanten auftreten. In diesem Fall ist unregelmäßige Kornform, die eine gute Verzahnung der einzelnen Pulverteilchen untereinander gewährleistet, wünschenswert.

5. Sinterfähigkeit:

Die Fähigkeit der Pulverteilchen im Preßling, bei der Wärmebehandlung (dem Sintern) feste Kontakte zu bilden, hängt hauptsächlich von ihrer chemischen Reinheit ab. Je geringer der Gehalt an nicht reduzierbaren Oxiden ($Al_2O_3$, $SiO_2$, etc.), desto besser ist die Sinterfähigkeit. Außerdem hängt die Sinterfähigkeit von der Kornfeinheit ab. Wegen der höheren Gesamtoberfläche und damit der höheren Oberflächenenergie, deren Verringerung eine Haupttriebkraft des Sintervorganges ist, sintern feinere Pulver schneller als gröbere.

Auf Grund dieser sich zum Teil widersprechenden Anforderungen ist die Herstellung von für die Pulvermetallurgie geeigneten Eisenpulvern eine Technologie, die große Erfahrung voraussetzt und bisher von weltweit nur wenigen Herstellern einwandfrei beherrscht wird. Die heute für die Pulvermetallurgie verwendeten Eisenpulver werden entweder durch Wasser- oder Luftverdüsen von Schmelzen hergestellt (wobei sich im allgemeinen die wasserverdüsten Pulver wegen ihrer besseren Verpreßbarkeit durchgesetzt haben) oder durch Reduktion von Eisenoxiden. Die wasserverdüsten ("atomisierten") Eisenpulver ergeben im allgemeinen bessere Eigenschaften der daraus hergestellten pulvermetallurgischen Formteile, vor allem bessere Preßdichten, da die einzelnen Pulverpartikel weitgehend kugelige Kornform aufweisen und in sich wenig porös sind. Im Gegensatz dazu weisen die durch Reduktion hergestellten Eisenpulver immer innere Poren und eine eher unregelmäßige Kornform auf, was die erreichbaren Preßdichten herabsetzt. Diese Kornform wirkt sich jedoch günstig auf die Festigkeit der Preßlinge ("Grünfestigkeit") aus. Der große Vorteil der durch Reduktion hergestellten Eisenpulver ("Schwammeisenpulver") ist ihr gegenüber den atomisierten Eisenpulvern deutlich niederigerer Preis, der sie für viele Anwendungen, bei denen an die Verpreßbarkeit keine so hohen Anforderungen gestellt werden, interessant macht.

Die größten Mengen an Schwammeisenpulver werden heute nach dem Höganäs-Verfahren hergestellt. Dabei wird hochreines Magnetiterz zu einer vorbestimmten Teilchengröße gemahlen, welche die endgültige Teilchengröße des Eisenpulvers bestimmt, getrocknet und in zylindrische Formen aus Feuerfestmaterial gefüllt, wobei ein Zylinder aus Eisenerz außen und innen von einem Gemisch von Koks und Kalk umgeben ist. Die so gefüllten Gefäße wandern durch einen Tunnelofen, wobei die Reduktionsdauer etwa 72 Stunden beträgt, danach wird der zusammengesinterte Eisenschwammkuchen, der in der Form von dickwandigen Rohren vorliegt, aus den Gefäßen entnommen, gesäubert und aufgemahlen. Nach dem Klassieren werden die einzelnen Pulverfraktionen getrennt in Bunker gefüllt und aus diesen ein synthetisches Pulver mit der idealen Kornverteilung zusammengemischt, das zum Abbau der durch das Mahlen eingebrachten Kaltverfestigung noch geglüht wird und danach fertig zum Versand vorliegt. Abgesehen von der großen Mahlenergie, die erforderlich ist, um die stark zusammengesinterten Eisenschwammrohre zu zermahlen, ist ein Nachteil des hier beschriebenen Verfahrens, daß die Korngröße der sich ergebenden Eisenpartikel und damit einer der wichtigsten Parameter des Eisenpulvers durch die Ausgangskorngröße des Eisenoxids bestimmt ist. D.h. beim Einsatz feinpulvriger Eisenoxide würden sich ebenso feine und damit für die Technik unbrauchbare Eisenpulver ergeben.

Ein zweites Verfahren zur Herstellung von Schwammeisenpulver wird von der Firma Pyron (Niagara Falls, New York) angewandt. Hierbei wird Walzzunder nach Mahlung auf vorgesehene Korngröße durch Erhitzen in Luft durchgehend zu $Fe_2O_3$ oxidiert und dann in einem Bandofen unter Wasserstoff reduziert. Die Reduktionstemperaturen bewegen sich hier in jedem Fall unterhalb von 1000°C. Der erhaltene Schwammeisenkuchen wird danach wie beim Höganäs-Verfahren aufgemahlen (wobei durch das Mahlen auch eine gewisse Nachverdichtung der schwammigen Eisenpulverteilchen erzielt wird), klassiert und aus den einzelnen Fraktionen ein Pulver mit der gewünschten Kornverteilung zusammengemischt. Auch dieses Verfahren steht und fällt mit der Erhältlichkeit eines bestimmten Ausgangsmaterials, in diesem Fall hochreinem Walzzunder.

Das Verfahren der Fina Metall Ltd., Montreal, Kanada, bei dem die Reduktion bei höheren Temperaturen, vorzugsweise im Bereich 1093 bis 1204°C, durchgeführt wird, verwendet als Ausgangsmaterial feinteiliges Eisenoxid, das durch Zerkleinerung eines geeigneten Erzes erhalten wurde.

Alle die genannten Verfahren verwenden Eisenoxidpulver, die in sich dicht sind, d.h. bei denen die einzelnen Eisenoxidteilchen lediglich vereinzelt Poren enthalten. Die Schüttdichten dieser Pulver liegen, je nach Feinheit, um ca. 2 $Mg.m^{-3}$. Bei der Reduktion dieser Oxide bildet sich zwar innere Porosität aus, da Sauerstoff entfernt wird, die Dichteunterschiede zwischen Oxid und Metall sind jedoch nicht so groß, daß ein Zerfall der einzelnen Teilchen eintritt, d.h. aus einer Schüttung von in sich dichten Eisenoxidteilchen einer bestimmten Korngröße entsteht durch Reduktion eine - mehr oder weniger zusammengesinterte - Schüttung von in sich wenig porösen Eisenteilchen etwa gleicher Korngröße wie beim Oxid. Die Reduktion von in sich dichten Eisenoxidteilchen stellt daher rein grundsätzlich kein gravierendes Problem dar.

Im Gegensatz dazu zielt das erfindungsgemäße Vefahren auf die Verarbeitung von feinen bis hochfeinen Eisenoxidpulvern, wie sie z.B. bei der Beizsäureregenerierung in Stahl- und Walzwerken in großen Mengen anfallen und bisher zum Teil in die Ferritindustrie gingen, für pulvermetallurgische Zwecke jedoch nicht ohne weiteres brauchbar waren. Bei diesen Materialien sind die Pulverteilchen in sich nicht dicht, sondern bestehen aus zahlreichen nadeligen Teilchen von z.T. kleiner als 1 $\mu m$ Durchmesser, die schwach zusammengesintert sind. Die Schüttdichte solcher Oxidpulver liegt bei deutlich unter 1,0 $Mg.m^{-3}$, zum Teil sogar unter 0,5 $Mg.m^{-3}$. Bei der Reduktion solcher Pulver werden üblicherweise entsprechend feine und lockere und damit für die Pulvermetallurgie nicht brauchbare Eisenpulver erhalten. Man hat auch schon versucht, solche Pulver, nach dem sie bei relativ niedriger Temperatur, z.B. zu Pellets gepreßt, reduziert worden sind, durch Mahlen zu verdichten und pulvermetallurgisch brauchbar zu machen.

Aus der DE-OS 20 14 336 ist z.B. ein Verfahren zum Herstellen von Eisenpulver bekanntgeworden, bei welchem Eisenoxidpellets im Gegenstrom zu dem Reduktionsgas durch den Ofen geführt werden. Die erhaltenen reduzierten Pellets werden in der Folge abgekühlt und zu Eisenpulver vermahlen. Der DE-OS 24 43 978 ist im weiteren ein Verfahren zum Herstellen von Eisenpulver mit faseriger Struktur zu entnehmen, bei welchem durch Sprührösten erhaltenes körnchen- oder pelletförmiges Eisenoxid in einer Kohlenmonoxidatmosphäre reduziert, gekühlt und zu Eisenpulver vermahlen wird. Zur Herstellung von für die Pulvermetallurgie geeigneten Eisenpulvern aus Eisenoxiden wird erfindungsgemäß vorgeschlagen, daß feine, lockere, in sich poröse Eisenoxidpulver mit einer Schüttdichte kleiner 1,0 $Mg.m^{-3}$ mit gasförmigen Reduktionsmitteln bei einer Temperatur reduziert werden, die zwischen 1200 und 1392°C liegt. In vorteilhafter Weise wird das Verfahren so geführt, daß das Eisenoxidpulver mit gasförmigen Reduktionsmitteln bei einer Temperatur zwischen 1200 und 1300°C reduziert werden.

Überraschenderweise gelingt es nach dem erfindungsgemäßen Verfahren, auch aus derart feinen Pulvern für die Pulvermetallurgie brauchbare Eisenpulver herzustellen. Wie metallographische Untersuchungen zeigten, beginnen sich bei Anwendung des erfindungsgemäßen Verfahrens die einzelnen feinen Partikel während des Reduktionsprozesses zunächst zu losen Agglomeraten, im Verlaufe der Reduktion aber zu festen und in sich nur mehr wenig porösen Aggregaten zusammenzulagern, die danach bei der Aufmahlung des Reduktionskuchens weitgehend erhalten bleiben und die einzelnen Eisenpulverteilchen bilden.

Der überraschendste Effekt beim erfindungsgemäßen Verfahren ist die Tatsache, daß sich die hochfeinen Eisenoxidnadeln weder zu entsprechend feinen Eisennadeln umwandeln - und damit einen Filz bilden - noch, wie bei der extrem hohen Sinteraktivität dieser superfeinen Pulver zu erwarten wäre, einen massiven Eisenklotz mit nur geringer innerer Porosität bilden (wie es z.B. auch wesentlich gröbere Eisenpulver in loser Schüttung bei hohen Temperaturen tun), sondern sich tatsächlich zu Aggregaten zusammenballen, die jene Größe haben, die für pulvermetallurgisch verwendbares Fe-Pulver günstig ist, und die untereinander nur durch schwache Teilchenbrücken verbunden sind. Offenbar ist gerade in jenem Abstand von den Verdichtungszentren, der der halben gewünschten Teilchengröße entspricht, die durch die Wanderung der Teilchen zu den Verdichtungszentren verursachte Zugkraft so groß, daß die meisten Teilchenbrücken abreißen.

Bevorzugt werden als Ausgangsmaterial Eisenoxidpulver mit einer Schüttdichte kleiner 0,5 $Mg.m^{-3}$ eingesetzt.

Nach dem erfindungsgemäßen Verfahren werden die feinen Oxide mit gasförmigen Reduktionsmitteln in loser Schüttung im Schiffchen oder geringfügig vorverdichtet (< 1 kbar) reduziert. Der entscheidende Schritt ist dabei die Durchführung der Reduktion bei extrem hohen Temperaturen, auf jeden Fall oberhalb 1200°C. Lediglich bei diesen Temperaturen tritt der überraschende Effekt der "Selbstagglomeration" ein. Da der Grad der Teilchenagglomeration im Reduktionskuchen hauptsächlich von der Temperatur der Reduktionsbehandlung abhängt, ist es beim erfindungsgemäßen Verfahren möglich, durch Variation der Reduktionstemperatur die innere Porosität in weiten Grenzen zu verändern, was z.B. bei der Herstellung von Schwammeisenpulver mit definierter innerer Porosität für sinterschwellungsfreie Fe-Cu-Werkstoffe von Vorteil ist.

In einfacher Weise kann als Reduktionsmittel Wasserstoff verwendet werden, wobei vorzugsweise die Reduktion in loser Schüttung vorgenommen wird.

In vorteilhafter Weise wird die Schüttung des Eisenoxids vor der Reduktion mit Drücken von kleiner 1 kbar vorverdichtet.

In vorteilhafter Weise wird das erfindungsgemäße Verfahren zweistufig geführt, wobei in einer Stufe bei Temperaturen zwischen 1200 und 1300°C, in der anderen bei Temperaturen unterhalb 1200°C gearbeitet wird. Eine derartige Verfahrensweise erlaubt es, das bereits teilweise umgesetzte Reduktionsgas bei höherer Temperatur nochmals weiter umzusetzen und hiedurch eine bessere Ausnutzung des Reduktionsgases zu liefern. Hiezu wird vorzugsweise das teilweise oxidierte Gas aus der Stufe mit niedrigerer Temperatur in die andere Stufe, bei welcher mit höherer Temperatur gearbeitet wird, übergeführt.

In besonders vorteilhafter Weise wird das Eisenoxid im Gegenstrom zur Reduktionsgasführung geführt und zuerst in die Stufe mit höherer Temperatur und anschließend in die Stufe mit niedriger Temperatur übergeführt. Auf diese Weise wird eine rasche Erwärmung auf vergleichsweise höhere Temperaturen erzielt, worauf in der Folge bei entsprechend niedrigerer Temperatur und reinerem Reduktionsgas die erfindungsgemäße Behandlung zu Ende geführt wird. Eine derartige Verfahrensführung hat besonders vorteilhafte Eigenschaften der Eisenpulver bei der nachfolgenden pulvermetallurgischen Verarbeitung ergeben.

Ausführungsbeispiel

100 g Eisenoxidpulver, Korngröße 50 μm, Schüttdichte 0,38 $Mg.m^{-3}$, 30,29 % reduzierbarer Sauerstoff wird in einem Eisenschiffchen 30 mm hoch geschüttet. Das Schiffchen wurde in einem Durchstoßofen mit Widerstandsheizung 4 Stunden bei 1300°C reduziert. Der Wasserstoffdurchsatz betrug 2 l pro min. Nach Abkühlung des Reduktionsprodukts unter Wasserstoff in einer wassergekühlten Ofenstrecke wurde der Reduktionskuchen aus dem Schiffchen entnommen und in einer Messermühle 5 min gemahlen. Es wurde ein Eisenpulver mit folgenden Eigenschaften erhalten:
Fülldichte 3,17 Mg.m$^{-3}$, Fließdauer 4,8 sec./50 g (5 mm Normtrichter), Preßdichte 6,64 Mg.m$^{-3}$ bei 6 kbar.

Bei einem Vergleichsversuch wurde identisches Eisenoxidpulver unter gleichen Bedingungen bei 1000°C reduziert, wobei ein Eisenpulver erhalten wurde, welches eine Fülldichte von 0,93 Mg.m$^{-3}$ aufwies, jedoch nicht fließfähig war. Die Preßdichte betrug 6,43 Mg.m$^{-3}$.

## Patentansprüche

1. Verfahren zur Herstellung von für die Pulvermetallurgie geeigneten Eisenpulvern aus Eisenoxiden, bei welchem feine, lockere, in sich poröse Eisenoxidpulver mit einer Schüttdichte kleiner 1,0 Mg.m$^{-3}$ mit gasförmigen Reduktionsmitteln bei einer Temperatur reduziert werden, die zwischen 1200 und 1392°C liegt.

2. Verfahren nach Anspruch 1, dadurch gekennzeichnet, daß das Eisenoxidpulver mit gasförmigen Reduktionsmitteln bei einer Temperatur zwischen 1200 und 1300°C reduziert wird.

3. Verfahren nach Anspruch 1 oder 2, dadurch gekennzeichnet, daß Eisenoxidpulver mit einer Schüttdichte kleiner 0,5 Mg.m$^{-3}$ eingesetzt wird.

4. Verfahren nach Anspruch 1 oder 2, dadurch gekennzeichnet, daß als Reduktionsmittel Wasserstoff verwendet wird.

5. Verfahren nach Anspruch 1 oder 2, dadurch gekennzeichnet, daß die Reduktion in loser Schüttung vorgenommen wird.

6. Verfahren nach Anspruch 1 oder 2, dadurch gekennzeichnet, daß die Schüttung des Eisenoxids vor der Reduktion mit Drücken von kleiner 1 kbar vorverdichtet wird.

7. Verfahren nach einem der Ansprüche 1 bis 6, dadurch gekennzeichnet, daß das Verfahren zweistufig durchgeführt wird, wobei in einer Stufe bei Temperaturen zwischen 1200 und 1300°C, in der zweiten Stufe bei Temperaturen unterhalb 1200°C gearbeitet wird.

8. Verfahren nach Anspruch 7, dadurch gekennzeichnet, daß das teilweise oxidierte Gas aus der Stufe mit niedrigerer Temperatur in die andere Stufe übergeführt wird.

9. Verfahren nach Anspruch 7 oder 8, dadurch gekennzeichnet, daß das Eisenoxid im Gegenstom zur Reduktionsgasführung geführt wird und zuerst in die Stufe mit höherer Temperatur und anschließend in die Stufe mit niedrigerer Temperatur übergeführt wird.

## Claims

1. Process for the preparation of iron powders of iron oxides suitable for powder metallurgy, in which fine, loose, inherently porous iron oxide powders with a bulk density of less than 1.0 Mg.m$^{-3}$ are reduced with gaseous reducing agents at a temperature which is between 1200 and 1392 °C.

2. Process according to claim 1, characterised in that the iron oxide powder is reduced with gaseous reducing agents at a temperature between 1200 and 1300 °C.

3. Process according to claim 1 or 2, characterised in that iron oxide powder with a hulk density of less than 0.5 Mg.m$^{-3}$ is used.

4. Process according to claim 1 or 2, characterised in that hydrogen is used as reducing agent.

5. Process according to claim 1 or 2, characterised in that reduction is carried out loose in bulk.

6. Process according to claim 1 or 2, characterised in that the loosely heaped iron oxide is precompressed before reduction at pressures of less than 1 kbar.

7. Process according to one of claims 1 to 6, characterised in that the process is carried out in two stages, operations being carried out in one stage at temperatures between 1200 and 1300 °C, in the second stage at temperatures below 1200 °C.

8. Process according to claim 7, characterised in that the partially oxidized gas is transferred from the stage with a relatively low temperature to the other stage.

9. Process according to claim 7 or 8, characterised in that the iron oxide is conveyed in counter-current to the passage of reducing gas and is transferred firstly to the stage with a relatively high temperature and subsequently to the stage with a relatively low temperature.

## Revendications

1. Procédé de préparation de poudres de fer,convenant pour la métallurgie des poudres , à partir d'oxydes de fer, selon lequel on réduit de l'oxyde de fer fin pulvérulent , lâche, poreux en soi , ayant une masse volumique apparente inférieure à 1,0 Mg.m$^{-3}$ , au moyen de réducteurs gazeux, à une température se situant entre 1 200 et 1 392 °C.

2. Procédé selon la revendication 1 , caractérisé en ce qu'on réduit l'oxyde de fer pulvérulent à l'aide de réducteurs gazeux à une température comprise entre 1 200 et 1 300°C.

3. Procédé selon la revendication 1 ou 2 ,caractérisé en ce qu'on utilise de l'oxyde de fer pulvérulent ayant une masse volumique apparente inférieure à 0,5 Mg.cm$^{-3}$.

4. Procédé selon la revendication 1 ou 2 , caractérisé en ce qu'on utilise l'hydrogène comme réducteur .

5. Procédé selon la revendication 1 ou 2 , caractérisé en ce qu'on effectue la réduction d'une matière en vrac .

6. Procédé selon la revendication 1 ou 2 , caractérisé en ce qu'avant la réduction l'oxyde de fer en vrac a été précompacté à des pressions inférieures à 1 kbar .

7. Procédé selon l'une des revendications 1 à 6 , caractérisé en ce qu'on conduit le procédé en deux étapes , en travaillant dans une étape à des températures comprises entre 1 200 et 1 300 °C et dans la seconde étape à des températures inférieures à 1 200 °C .

8. Procédé selon la revendication 7 , caractérisé en ce qu'on tranfère le gaz partiellement oxydé , de l'étape à plus basse température à l'autre étape .

9. Procédé selon la revendication 7 ou 8 , caractérisé en ce qu'on achemine l'oxyde de fer à contre-courant du gaz réducteur, et en ce qu'on le fait passer tout d'abord dans l'étape à température supérieure puis dans l'étape à température inférieure .